# EUROPEAN PATENT SPECIFICATION

(11) **EP 1 996 661 B1**
(45) Date of publication and mention of the grant of the patent: **14.05.2014**
(21) Application number: 07747556.4
(22) Date of filing: 28.02.2007
(51) Int. Cl.: C09D 127/12, C09D 183/04

(54) **FOULING RELEASE COMPOSITION**
FÄULNISFREIGABEZUSAMMENSETZUNG
COMPOSITION ANTI SALISSURE

(30) Priority: 06.03.2006 NO 20061075
(43) Date of publication of application: 03.12.2008
(73) Proprietor: Jotun AS, 3209 Sandefjord (NO)
(72) Inventor: DAHLING, Marit, N-3218 Sandefjord (NO); LIEN, Einar, Magne, N-3210 Sandefjord (NO); ORSINI, Lorenzo, Maria, I-54037 Massa (MS) (IT); GALLI, Giancarlo, I-51017 Pescia (PT) (IT); CHIELLINI, Emo, I-56127 Pisa (IT)
(74) Representative: Campbell, Neil Boyd
(86) International application number: PCT/NO2007/000082
(87) International publication number: WO 2007/102741

(56) References cited:
- WO-A-2004/076570
- US-A- 5 486 421
- US-A1- 2005 153 610
- US-B1- 6 417 284
- US-B1- 6 485 838
- US-B1- 6 531 525

## Description

The present invention relates to a fouling release composition comprising a cured or cross-linked polysiloxane and a fluorinated polymer or oligomer and the use thereof for preventing fouling in an aquatic environment.

### Background

Surfaces that are submerged in seawater are subject to fouling by marine organisms such as green algae, brown algae, barnacles, mussel, tube worms and the like. On marine constructions such as vessels, oil platforms, buoys etc. this fouling may result in increased load and accelerated corrosion. On vessels the fouling will reduce the manoeuvrability and increase the frictional resistance which will cause a reduction of the speed and increased fuel consumption. '

To prevent attachment and growth of such marine organisms antifouling coatings are used. Traditional antifouling coatings prevent fouling on the surface by release of substances that are toxic to aquatic fouling organisms.

A more environmentally benign solution is the use of biocide-free fouling release coatings. These systems are effective due to the physical properties of the surfaces. Low surface energy, low glass transition temperature (T_{g}) and low elastic modulus of the surface makes it diffcult for the organisms to adhere firmly to the surface, which reduce the accumulation of marine organisms.

The use of silicone elastomers, or silicone rubbers, for fouling release coatings has been known for some time, as disclosed in US 2,986,474, GB 1 307 001 and US 3,702,778. To improve the fouling release performance of the silicone coatings, chemically inert fluids additives are used. These additives migrate to the coating surface where they create a surface layer that promotes the release properties. GB 1 470 465 discloses the use of silicone oils in a curable silicone rubber formulation. GB 1 581 727 discloses the use of silicone-free fluid organic compounds, for example low molecular weight polyolefins, low molecular weight polydienes, mineral oils and plasticizers, in a vulcanized silicone rubber formulation. US 6,107,381 discloses the use of a non-curable polysiloxane comprising at least one polyoxyalkene moiety.

The fouling release coatings do not prevent fouling, but reduced the adhesion of fouling organisms on the surface. Some forces are needed to remove the attached fouling organisms from the surface. On a ship hull the hydrodynamic forces of the moving vessel have to be sufficiently high for an effective release of the fouling organisms. The silicone fouling release coatings is therefore limited to fast moving vessels with a speed of at least 15 knots. There is a need to improve the fouling release properties of these coatings, and the present invention offers a method for such improvement.

Perfluorinated compounds and polymers containing perfluorinated moieties are known for their very low surface energy and they can be used to improve the fouling release properties of silicone based systems. In a silicone system the fluorinated component will spontaneously migrate to the surface and accumulate at the polymer-air interface. Perfluoroalkyl groups will self-assembly on the surface stabilising the surface against reconstruction in water.

Fluorinated polymers and additives have been described for use in fouling release compositions. US 6,265,515 B1 (priority 1999, US Navy) discloses a curable fluorinated silicone resin and blends of the curable fluorinated silicone resin providing a low surface energy fouling release composition. The use of a cured or crosslinked polysiloxane and a fluorinated polymer or oligomer is not mentioned. EP1 042 413 B1 (priority GB 1997, Akzo) discloses a two-layer fouling release coating system where the outer layer comprising a curable polymeric fouling-inhibiting material, advantageously a curable polysiloxane, but other curable materials, especially fluorine-containing polymers may be used. The use of fluorine containing polymers in combination with a curable polysiloxane is not mentioned.

Arias E.M., et al., Polymer Preprints (1997), vol. 38, pp 512-513 describes a pure perfluorinated (meth)acrylate fouling release polymer. No fouling release compositions or use of the fluorinated polymers in combination with a curable polysiloxane are mentioned. US 6,899,955 B2 (priority EP 2000, Akzo) discloses a curable fluorinated resin, comprising a bifunctional fluorinated polyether having silicone end groups. Examples of additives that can be used in the coating composition are non- or monofunctional fluorinated polyethers. The use of fluorine containing polymers in combination with a curable polysiloxane is not mentioned. EP 1 377 643 B1 / US 2002/0192181 (priority EP 2001, Akzo) discloses a cured or cross-linked polymer and a non-reactive fluid fluorinated alkyl- or alkoxy-containing polymer or oligomer. Polysiloxane is the preferred binder. The use of a fluorinated polymer or oligomer from ethylenically unsaturated monomers are not described.

US 6485838 discloses a coating composition containing a component (a) selected from organosilanes, hydrolysates of the organosilanes, and condensates of organosilanes, and a polymer component (b) having a molecular weight Mw of at least 5000 and having a silyl group.

The present invention provides a fouling release composition with improved fouling release properties comprising a cured or crosslinked polysiloxane and a fluorinated polymer or oligomer. The introduction of polysiloxone pendant groups in the fluorinated polymer or oligomer improves the compatibility with the polysiloxane coating formulation and facilitate the formation of a fluorinated surface layer. The perfluoroalkyl groups self-assembly on the surface stabilising the surface against reconstruction in water. This fluorinated layer can be further stabilised by introducing silane reactive groups in the fluorinated polymer or oligomer that can take part in the curing reaction of the polysiloxane coating.

The present invention represents a facile way to produce fluorinated polymers and oligomers, starting from commercial available products. It is possible to control the properties of the fluorinated polymer or oligomer such as surface energy, compatibility and reactivity in a polysiloxane blend by varying the monomer ratio and the chain length of the pendant groups.

Fluorinated compounds have a relatively high cost. The present invention represent a way of improve the properties of a fouling release coating with a minimum amount of a fluorinated polymer.

The present invention provides a fouling release composition comprising a cured or crosslinked polysiloxane and a fluorinated polymer or oligomer. The present invention also relates to the use of the fouling release composition above in fouling release coatings for application to articles submerged in seawater.

### DETAILED DESCRIPTION:

The fluorinated polymer or oligomer of the present invention relates to a polymer or oligomer comprising.
monomer (A) of the general formula (I):

X¹-(R¹)ₘ-R₁ (I)

wherein
X¹ is an ethylenically unsaturated group, such as acryloyloxy, methacryloyloxy, vinyl or vinyloxycarbonyl
R¹ is a substituted or unsubstituted linear or branched C₁-C₁₀ alkyl m is 0 or 1
R_{f} is a perfluorinated linear or branched C₁-C₂₀ alkyl;
monomer (B) of the general formula (II): 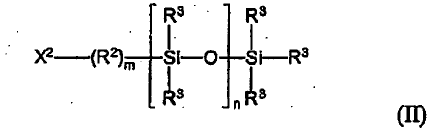 wherein
X² is an ethylenically unsaturated group, such as acryloyloxy, methacryloyloxy or vinyl
R² is a linear or branched C₁-C₁₀ alkyl
R³ is independently selected from C₁-C₁₀ alkyl,
m is 0 or 1
n is an integer from 1 to 200;
optionally monomer (C) of the general formula (III): 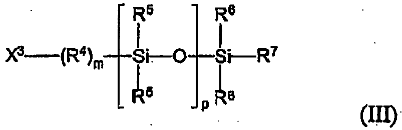 wherein
X³ is an ethylenically unsaturated group, such as acryloyloxy, methacryloyloxy or vinyl
R⁴ is a linear or branched C₁-C₁₀ alkyl
m is 0 or 1
R⁵ is a C₁-C₁₀ alkyl,
R⁶ is independently selected from C₁-C₁₀ alkoxy and C₁-C₁₀ alkyl,
R⁷ is a C₁-C₁₀ alkoxy,
p is 0 or 1;
and optionally one or more other polymerisable ethylenically unsaturated compounds.

The fluorinated polymer or oligomer of the present invention contains 1-99% by weight of monomer A, preferably 1-50% by weight of monomer A, especially preferred 1-25% by weight of monomer A. The fluorinated polymer or oligomer of the present invention contains preferably 1-99% by weight of monomer B. For monomer B (of the general formula (II)), n is preferably>1, more preferably n is >4 and especially preferably n is >8. The fluorinated polymer or oligomer of the present invention contains 0-25% by weight of monomer C.

Examples of monomer A include
1H,1H-perfluoropropyl acrylate, 1H,1H-perfluorobutyl acrylate, 1H,1H-perfluorooctyl acrylate, 1H,1H-perfluorooctyl methacrylate, 1H,1H-perfluorodecyl acrylate,1H,1H-perfluorodecyl methacrylate, (perfluorocyclohexyl)methyl acrylate, (perfluorooyclohexyl)methyl methacrylate;
2-((perfluorobutyl)ethyl acrylate, 2-(perfluorobutyl)ethyl methacrylate, 2-(perfluorohexyl)ethyl acrylate, 2-(perfluorohexyl)ethyl methacrylate, 2-(perfluorooctyl)ethyl acrylate, 2-(perfluorooctyl)ethyl methacrylate, 2-(perfluorodecyl)ethyl acrylate, 2-(perfluorodecyl)ethyl methacrylate;
2-((perfluoro-3-methylbutyl)ethyl acrylate, 2-(perfluoro-3-methylbutyl)ethyl methacrylate, 2-(perfluoro-5-methylhexyl)ethyl acrylate, 2-(perfluoro-5-methylhexyl)ethyl methacrylate, 2-(perfluoro-7-methyloctyl)ethyl acrylate, 2-(perfluoro-7-methyloctyl)ethyl methacrylate, 2-(perfluoro-9-methyldecyl)ethyl acrylate, 2-(perfluoro-9-methyldecyl)ethyl methacrylate;
1H,1H,5H-perfluoropentyl acrylate, 1H,1H,5H-perfluoropentyl methacrylate, 1H,1H,7H-perfluoroheptyl acrylate, 1H,1H,7H-perfluoroheptyl methacrylate, 1H,1H,9H-perfluorononyl acrylate, 1H,1H,9H-perfluorononyl methacrylate, 1H,1H,11H-perfluoroundecyl acrylate, 1H,1H,11H-perfluoroundecyl methacrylate;
3-((perfluoro-3-methylbutyl)-2-hydroxypropyl acrylate, 3-(perfluoro-3-methylbutyl)-2-hydroxypropyl methacrylate, 3-(perfluoro-5-methylhexyl)-2-hydroxypropyl acrylate, 3-(perfluoro-5-methylhexyl)-2-hydroxypropyl methacrylate, 3-(perfluorobutyl)-2-hydroxypropyl acrylate, 3-(perfluorohexyl)-2-hydroxypropyl acrylate, 3-(perfluorohexyl)-2-hydroxypropyl methacrylate, 3-(perfluorooctyl)-2-hydroxypropyl acrylate, 3-(perfluorooctyl)-2-hydroxypropyl methacrylate;
vinyl perfluoroheptanoate, vinyl perfluorooctanoate, vinyl perfluorononanoate, p-vinylbenzyl perfluorooctanoate, 3-[2'-(perfluoropropoxy)-1',1',2'-trifluoroethoxy]vinylbenzene; 2-(perfluoropropoxy)perfluoropropyl trifluorovinyl ether

Examples of monomer B include
monomethacryloxypropyl terminated polydimethylsiloxane and monovinyl terminated polydimethylsiloxane. Preferred Mw 500-20 000, more preferred 800-10 000.

Examples of monomer C include
(3-acryloyloxypropyl)trimethoxysilane, (3-acryloyloxypropyl)methyldimethoxysilane, (3-acryloyloxypropyl)dimethylmethoxysilane, (3-methacryloyloxypropyl)triethoxysilane, (3-methacryloyloxypropyl)ethyldimethoxysilane, (3-methacryloyloxypropyl)dimethyldiethoxysilane, (methacryloyloxymethyl)trimethoxysilane, (methacryloyloxymethyl)triethoxysilane, (methacryloyloxymethyl)dimethylethoxysilane, (3-methacryloyloxypropyl)trimethoxysilane, (3-methacryloyloxypropyl)triethoxysilane, (3-methacryloyloxypropyl)methyldimethoxysilane, (3-methacryloyloxypropyl)ethyldimethoxysilane, (3-methacryloyloxypropyl)dimethylmethoxysilane, (3-methacryloyloxypropyl)dimethyldiethoxysilane,
vinyltrimethoxysilane, vinyltriethoxysilane, vinyltriisopropoxysilane, vinyltri-*tert-*butoxysilane, vinylmethyldimethoxysilane, vinylmethyldiethoxysilane, vinyldimethylethoxysilane, styrylethyltrimethoxysilane,

Examples of other ethylenically unsaturated compounds that may also be used in conformity with the invention are monomers such as acrylic acid and methacrylic acid, esters and amides of acrylic acid and methacrylic acid, vinyl compounds.

The fluorinated polymers according to the present invention may be prepared by polymerising at least one monomer A of the structure represented by formula (I) and at least are monomer B represented by formula (II) by a suitable polymerisation process.

The Fluorinated polymer or oligomer of the present invention has a lower surface energy than the polysiloxane. In a blend of the fluorinated polymer or oligomer and polysiloxane the fluorinated polymer or oligomer will spontaneously migrate to the surface and accumulate at the polymer-air interface. This process is thermodynamically driven due to the difference in surface energy. The low surface energy provided by the fluorinated polymer or oligomer in combination with the elastic properties provided by the cured polysiloxane will improve the fouling release properties of the coating. In a coating comprising a fluorinated polymer or oligomer and a curable polysiloxane it is therefore desirable that the migration of the fluorinated polymer or oligomer to the surface is facilitated and that the fluorinated surface layer is stable. Since the fluorinated polymer or oligomer are generally incompatible with polysiloxane, this can prevent a controlled migration and of the fluorinated polymers or oligomers to the coating surface and the formation of a fluorinated surface layer and instead result in the formation of fluorinated domains in polysiloxane matrix. The introduction of polysiloxane pendant groups in the fluorinated polymer or oligomer improves the compatibility with the polysiloxane coating formulation and facilitate the formation of a fluorinated surface layer. When the fluorinated polymer or oligomer have migrated to the surface it is desirable to stabilise the surface of the coating against reconstruction and erosion of the outer fluorinated layer. Perfluoroalkyl groups will self-assembly on the surface stabilising the surface against reconstruction in water. This layer can be further stabilised by introducing silane reactive groups in the fluorinated polymer or oligomer that can take part in the curing reaction of the polysiloxane coating.

The preferred amount of the fluorinated polymer or oligomer is 0.1-25 % by weight of the cured or crosslinked polysiloxane.

The fouling release composition of the present invention comprises a cured or crosslinked polysiloxane. Preferably, the cured or crosslinked polysiloxane is a conventional room temperature vulcanizable (hereafter denoted RTV) composition generally consisting of the main components:
1) a reactive polysiloxane
2) a crosslinking agent
3) a condensation catalyst

The RTV composition can be a one-part or made up of several parts, but preferably not more than a three parts system.

The cured or crosslinked polysiloxane of the present invention is preferably a diorganosiloxane of the general formula (IV): 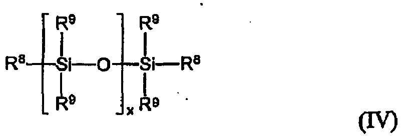 wherein
R⁸ is a hydroxyl or -O-Si(R¹⁰)_{y}(R¹¹)_{(3-y)}
R⁹ is independently selected from C₁-C₁₀ alkyl, aryl and alkaryl
R¹⁰ is a hydroxy or a C₁-C₃ alkoxy
R¹¹ is hydrogen or a C₁-C₃ alkyl,
y is an integer from 1 to 3.

Preferably, the cured or crosslinked polysiloxane is a reactive polydimethylsiloxane.

The RTV composition may comprise one or more reactive silicone polymers differing in average molecular weight.

The crosslinking agent of the RTV composition has the general formula (V):

(R¹²)_{z}-SI-(X⁴)_{(4-z)} (V)

wherein
X⁴ is alkoxy, acetoxy, oxime, enoxy or amine
R¹² is a C₁-C₁₀ alkyl,
z is 0 or 1.

The crosslinking agent may be in a monomeric form or in the form of a seif-condensation product, such as a dimer, oligomer or polymer.

If the polysiloxane is di- or tri-alkoxy terminated, a separate crosslinking agent is not required.

Curing of the silicone binder proceeds in the presence of a catalyst. Useful catalysts are those known to facilitate condensation reactions in RTV silicone systems, such as carboxylic salts of tin, zinc, titanium, lead, iron, barium and zirconium. Non-metallic catalysts such as hexylammonium acetate and benzyl trimethylammonium acetate, may also be employed.

A coating formulation comprising a fluorinated polymer or oligomer and a curable polysiloxane in accordance with the present invention may also include one or more non-reactive oils and other substances commonly used in coating formulation such as and fillers, pigments, solvents and additives:
Examples of non-reactive oils include silicone oils such as polydimethylsiloxane, methylphenyl silicone oils; organic oils such as polyolefin oils and paraffin and biological oils such as coconut oil.
Examples of fillers include barium sulphate, calcium sulphate, calcium carbonate, silicas, silicates, bentonites and other clays. The preferred fillers are silica, including hydrophobic and hydrophilic fumed silica, and precipitated silica.
Examples of pigments include titanium dioxide, iron oxides, carbon black, lamp black, iron blue, phthalocyanine blue, cobalt blue, ultramarine blue, phthalocyanine green,
Examples of suitable solvents and diluents include aromatic hydrocarbons such as toluene, xylene, trimethylbenzene; aliphatic hydrocarbons such as white spirit; alcohols such as 1-methoxy-2-propanol, butanol; ketones such as 2,4-pentanedione, 4-methyl-2-pentanone, 5-methyl-2-hexanone, cyclohexanone; esters such as butyl acetate and mixtures of the above with one another or an aliphatic hydrocarbon.

The coating can be applied by any conventional method such as brushing, rolling or spraying (airless or conventional). The composition of the present invention can be applied onto any pre-treatment layers designed for polysiloxane based fouling release finish layers. Examples of such coating layers are epoxy anticorrosive layers and silicone-containing tie-layers designed to ensure adhesion between the substrate and the final silicone containing fouling release layer.

The following examples illustrate the present invention:

### Example 1:

### General procedure for preparation of fluorinated polymers

Solvent is charged to a reaction vessel equipped with stirrer, condenser, thermometer, an adding device and nitrogen inlet, and heated to 85°C under stirring. The monomer batch is prepared by charging the remaining solvents, the fluorinated monomer, other co-monomers and initiator in a flask or beaker. The monomer batch is then charged dropwise to the reaction vessel over a period of 2 hours. The reaction mixture is kept at 85°C for an additional 3 hours. Optionally, additional initiator in solvent may be added during the post reaction time or the temperature may be raised to 120°C for 30 minutes in order to consume any residual monomers.

The type and amount of monomers, solvent and initiator used for the preparation of the fluorinated polymers are given in table 1.

**Table 1:**

| | | **P1** | **P2** | **P3** | **P4** | **P5** | **P6** | **P7** | **P8** | **P9** | **P10** | **P11** | **P12** |
|---|---|---|---|---|---|---|---|---|---|---|---|---|---|
| Monomers (g) | 1H,1H-perfluorodecyl acrylate | 25.0 | | | | | | | | | | | |
| | 1H,1H,2H,2H-perfluorodecyl acrylate | | 23.7 | | | | | | | | | | |
| | 1H,1H,2H,2H-perfluorodecyl methacrylate | | | 24.2 | 13.8 | 23.2 | | | | | | 24.0 | 23.8 |
| | 1H,1H,2H,2H-perfluorooctyl acrylate | | | | | | 20.1 | 61.4 | | | | | |
| | 1H,1H,2H,2H-perfluorooctyl methacrylate | | | | | | | | 20.6 | 59.0 | 20.5 | | |
| | Monomethacryloxypropyl terminated polydimethylsiloxane (Mw 800-1000) | | | | | | | | | 41.0 | 79.5 | | |
| | Monomethacryloxypropyl terminated polydimethylsiloxane ((Mw ∼ 5000) | 75.0 | 76.3 | 75.8 | | | 79.9 | 38.6 | 79.4 | | | 75.2 | 74.5 |
| | Monomethacryloxypropyl terminated polydimethylsiloxane (Mw ∼ 10000) | | | | 86.2 | 76.8 | | | | | | | |
| | 3-(Trimethoxysilyl)propyl methacrylate | | | | | | | | | | | 0.8 | 1.6 |
| Solvent (g) | (Trifluoromethyl)benzene | 150 | 150 | 150 | 150 | 150 | 150 | 150 | 150 | 150 | 150 | 150 | 150 |
| Initiator (g) | AMBN | 0.50 | 0.50 | 0.50 | 0.50 | 0.50 | 0.50 | 0.50 | 0.50 | 0.50 | 0.50 | 0.50 | 0.50 |

### Example 2:

### Preparation of a three pack coating composition

**Part A (base):**

| | |
|---|---|
| 105.0 g | polydimethylsiloxane, silanol terminated (visc. 1000 cSt) |
| 18.0 g | polydimethylsiloxane (visc. 100 cSt) |
| 6.0 g | titanium dioxide |
| 1.0 g | silica |
| 60.0 g | Xylene |
| 6.5 g | fluorinated polymer solution from example 1 (P1-P12) |

**Part B (curing agent)**

| | |
|---|---|
| 5.0 g | tetraethyl silicate |

**Part C (catalyst solution)**

| | |
|---|---|
| 0.4 g | dibutyltin diacetate |
| 8.0 g | Xylene |

### Example 3:

### Testing of fouling release performance using pseudobarnacles

The coating compositions of Example 2 were applied by a frame applicator onto PVC panels primed with an epoxy primer and a tie-coat for silicone based coatings. The panels are allowed to cure for at least 1 day. Small aluminium studs (pseudobarnacles) are glued on to the surface using epoxy adhesive and cured for 5 days. The pseudobarnacles are removed by a shear force applied parallel to the surface using a hand-held force gauge. The force required to remove the pseudobarnacle is noted. The strength of adhesion is calculated by dividing the shear force by the area of the pseudobarnacle base. The value reported is the average of 6 measurements.

The pseudobarnacle strength of adhesion for the coating compositions of Example 2 are given in table 2.

**Table 2**

| **Coating composition** | **Fluorinated polymer (Example 1)** | **Adhesion strength of shear (MPa)** |
|---|---|---|
| C0 | None | 99 |
| C1 | P1 | 28 |
| C2 | P2 | 35 |
| C3 | P3 | 27 |
| C4 | P4 | 24 |
| C5 | P5 | 33 |
| C6 | P6 | 40 |
| C7 | P7 | 64 |
| C8 | P8 | 28 |
| C9 | P9 | 81 |
| C10 | P10 | 56 |
| C11 | P11 | 54 |
| C12 | P12 | 67 |

## Claims

1. Fouling release composition comprising a cured or cross-linked polysiloxane and a fluorinated polymer or oligomer derived from an ethylenically unsaturated monomer, wherein the fluorinated polymer or oligomer comprises:
monomer (A) of the general formula (I):
X¹-(R¹)ₘ-R₁ (I)
wherein
X¹ is an ethylenically unsaturated group, such as acryloyloxy, methacryloyloxy, vinyl or vinyloxycarbonyl,
R¹ is a substituted or unsubstituted linear or branched C₁-C₁₀ alkyl,
m is 0 or 1,
Rf is a perfluorinated linear or branched C₁-C₂₀ alkyl;
monomer (B) of the general formula (II): 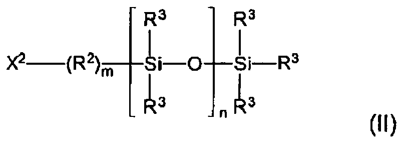 wherein
X² is an ethylenically unsaturated group, such as acryloyloxy, methacryloyloxy or vinyl,
R² is a linear or branched C₁-C₁₀ alkyl,
R³ is independently selected from C₁-C₁₀ alkyl,
m is 0 or 1,
n is an integer from 1 to 200;
optionally monomer (C) of the general formula (III): 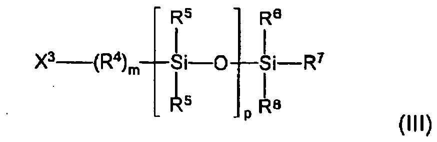 wherein
X³ is an ethylenically unsaturated group, such as acryloyloxy, methacryloyloxy or vinyl,
R⁴ is a linear or branched C₁-C₁₀ alkyl,
m is 0 or 1,
R⁵ is a C₁-C₁₀ alkyl,
R⁶ is independently selected from C₁-C₁₀ alkoxy and C₁-C₁₀ alkyl,
R⁷ is a C₁-C₁₀ alkoxy,
p is 0 or 1;
and optionally one or more other polymerisable ethylenically unsaturated compound.

2. Fouling release composition in accordance with claim 1, wherein the fluorinated polymer or oligomer comprises 1-99% by weight of monomer A, 1-99% by weight of monomer B, and 0-25% by weight of monomer C.

3. Fouling release composition in accordance with claim 1, wherein the fluorinated polymer or oligomer comprises 1-50% by weight of monomer A, 1-99% by weight of monomer B, and 0-25% by weight of monomer C.

4. Fouling release composition in accordance with claim 1, wherein the fluorinated polymer or oligomer comprises 1-25% by weight of monomer A, 1-99% by weight of monomer B, and 0-25% by weight of monomer C.

5. Fouling release composition in accordance with claim 1, wherein the cured or crosslinked polysiloxane is a diorganosiloxane of the general formula (IV): 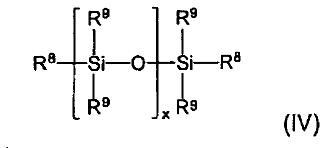 wherein
R⁸ is a hydroxyl or -O-Si(R¹⁰)_{y}(R¹¹)_{(3-y)}.
R⁹ is independently selected from C₁-C₁₀ alkyl, aryl and alkaryl,
R¹⁰ is a hydroxy or a C₁-C₃ alkoxy,
R¹¹ is hydrogen or a C₁-C₃ alkyl,
y is an integer from 1 to 3.

6. Fouling release composition in accordance with claim 1-5, wherein the cured or crosslinked polysiloxane is a reactive polydimethylsiloxane.

7. Fouling release composition in accordance with claim 1-5, wherein the amount of the fluorinated polymer or oligomer is 0.1-25 % by weight of the cured or crosslinked polysiloxane.

8. Use of a fouling release composition of any one of claims 1-7, in fouling release coatings for articles submerged in seawater.

9. Use in accordance with claim 8, wherein the articles are marine constructions such as vessels, oil platforms and buoys.

## Patentansprüche

1. Antifouling-Zusammensetzung, die ein gehärtetes oder quervernetztes Polysiloxan und ein fluoriertes Polymer oder Oligomer umfasst, wobei das fluorierte Polymer oder Oligomer sich von einem ethylenisch ungesättigten Monomer ableitet und Folgendes umfasst:
Monomer (A) der allgemeinen Formel (I):
x¹-(R¹)ₘ-R_{f} (I)
wobei
X¹ eine ethylenisch ungesättigte Gruppe ist, wie etwa Acrylyloxy, Methacrylyloxy, Vinyl oder Vinyloxycarbonyl,
R¹ ein substituiertes oder nicht substituiertes geradkettiges oder verzweigtes C₁-C₁₀-Alkyl ist,
m gleich 0 oder 1 ist,
R_{f} ein perfluoriertes geradkettiges oder
verzweigtes C₁-C₂₀-Alkyl ist;
Monomer (B) der allgemeinen Formel (II) : 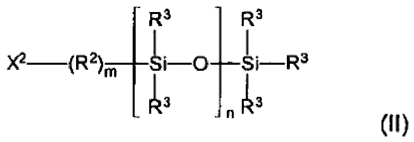 wobei
X² eine ethylenisch ungesättigte Gruppe ist, wie etwa Acrylyloxy, Methacrylyloxy oder Vinyl,
R² ein geradkettiges oder verzweigtes C₁-C₁₀-Alkyl ist,
R³ auf unabhängige Werte aus C₁-C₁₀-Alkyl ausgewählt ist,
m gleich 0 oder 1 ist,
n eine ganze Zahl von 1 bis 200 ist;
möglicherweise Monomer (C) der allgemeinen Formel (III) : 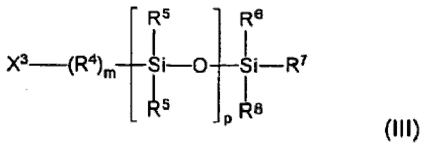 wobei
X³ eine ethylenisch ungesättigte Gruppe ist, wie etwa Acrylyloxy, Methacrylyloxy oder Vinyl,
R⁴ ein geradkettiges oder verzweigtes C₁-C₁₀-Alkyl ist,
m gleich 0 oder 1 ist,
R⁵ ein C₁-C₁₀-Alkyl ist,
R⁶ auf unabhängige Weise aus C₁-C₁₀-Alkoxy und C₁-C₁₀-Alkyl ausgewählt ist,
R⁷ ein C₁-C₁₀-Alkoxy ist,
p gleich 0 oder 1 ist;
und möglicherweise eine oder mehrere polymerisierbare ethylenisch ungesättigten Verbindungen.

2. Antifouling-Zusammensetzung nach Anspruch 1, wobei das fluorierte Polymer oder Oligomer 1 bis 99 Gewichts-% an Monomer A, 1 bis 99 Gewichts-% an Monomer B und 0 bis 25 Gewichts-% an Monomer C umfasst.

3. Antifouling-Zusammensetzung nach Anspruch 1, wobei das fluorierte Polymer oder Oligomer 1 bis 50 Gewichts-% an Monomer A, 1 bis 99 Gewichts-% an Monomer B und 0 bis 25 Gewichts-% an Monomer C umfasst.

4. Antifouling-Zusammensetzung nach Anspruch 1, wobei das fluorierte Polymer oder Oligomer 1 bis 25 Gewichts-% an Monomer A, 1 bis 99 Gewichts-% an Monomer B und 0 bis 25 Gewichts-% an Monomer C umfasst.

5. Antifouling-Zusammensetzung nach Anspruch 1, wobei es sich bei dem gehärteten oder quervernetzten Polysiloxan um ein Diorganosiloxan der allgemeinen Formel (IV) handelt: 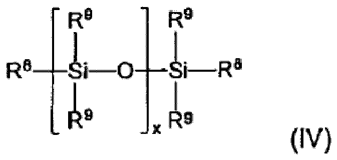 wobei
R⁸ ein Hydroxyl oder -O-Si(R¹⁰)_{y}(R¹¹)_{(3-y)} ist,
R⁹ auf unabhängige Weise aus C₁-C₁₀-Alkyl, Aryl und Alkaryl ausgewählt ist,
R¹⁰ ein Hydroxyl oder ein C₁-C₃-Alkoxy ist,
R¹¹ gleich Wasserstoff oder ein C₁-C₃-Alkyl ist,
y eine ganze Zahl von 1 bis 3 ist.

6. Antifouling-Zusammensetzung nach Anspruch 1-5, wobei es sich bei dem gehärteten oder quervernetzten Polysiloxan um ein reaktionsfähiges Polydimethylsiloxan handelt.

7. Antifouling-Zusammensetzung nach Anspruch 1-5, wobei die Menge des fluorierten Polymers oder Oligomers 0,1 bis 25 Gewichts-% des gehärteten oder quervernetzten Polysiloxans ausmacht.

8. Verwendung einer Antifouling-Zusammensetzung nach einem beliebigen der Ansprüche 1 bis 7, in Antifouling-Beschichtungen für Gegenstände, die in Meerwasser eingetaucht sind.

9. Verwendung nach Anspruch 8, wobei es sich bei den Gegenständen um Meeresbauwerke wie etwa Schiffe, Ölplattformen und Bojen handelt.

## Revendications

1. Composition anti-salissure comprenant un polysiloxane réticulé ou durci et un polymère ou un oligomère fluoré tiré d'un monomère non saturé en ce qui concerne l'éthylène, dans lequel le polymère ou l'oligomère fluoré comprend :
un monomère (A) de la formule générale (I) :
**X¹-(R¹)ₘ-R_{f}** **(I)**
dans laquelle
X¹ est un groupe non saturé en ce qui concerne l'éthylène, tel que de l'acryloyloxy, méthacryloyloxy, vinyle ou vinyloxycarbonyle,
R¹ est un alkyle en C₁-C₁₀ substitué ou non substitué linéaire ou ramifié,
m vaut 0 ou 1,
Rf est un alkyle en C₁-C₂₀ perfluoré linéaire ou ramifié ;
un monomère (B) de la formule générale (II) : 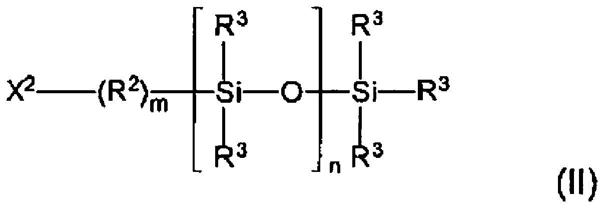 dans laquelle
X² est un groupe non saturé en ce qui concerne l'éthylène, tel que de l'acryloyloxy, méthacryloyloxy ou vinyle,
R² est un alkyle en C₁-C₁₀ linéaire ou ramifié,
R³ est indépendamment sélectionné à partir d'un alkyle en C₁-C₁₀,
m vaut 0 ou 1,
n est un entier de 1 à 200 ;
de manière facultative un monomère (C) de la formule générale (III) : 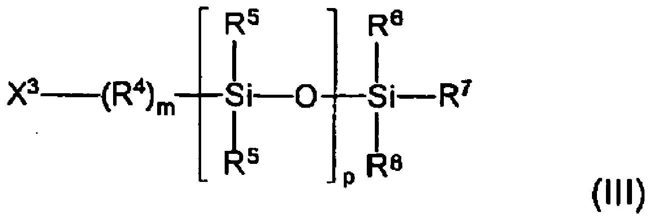 dans laquelle
X³ est un groupe non saturé en ce qui concerne l'éthylène, tel que de l'acryloyloxy, méthacryloyloxy ou vinyle,
R⁴ est un alkyle en C₁-C₁₀ linéaire ou ramifié,
m vaut 0 ou 1,
R⁵ est un alkyle en C₁-C₁₀,
R⁶ est indépendamment sélectionné à partir d'un alcoxy en C₁-C₁₀ et d' un alkyle en C₁-C₁₀,
R⁷ est un alcoxy en C₁-C₁₀,
p vaut 0 ou 1 ;
et de manière facultative un ou plusieurs autres composés pouvant être polymérisés non saturés en ce qui concerne l'éthylène.

2. Composition anti-salissure selon la revendication 1, dans laquelle le polymère ou l'oligomère fluoré comprend de 1 à 99 % en poids de monomère A, 1 à 99 % en poids de monomère B et 0 à 25 % en poids de monomère C.

3. Composition anti-salissure selon la revendication 1, dans laquelle le polymère ou l'oligomère fluoré comprend de 1 à 50 % en poids de monomère A, 1 à 99 % en poids de monomère B et 0 à 25 % en poids de monomère C.

4. Composition anti-salissure selon la revendication 1, dans laquelle le polymère ou l'oligomère fluoré comprend de 1 à 25 % en poids de monomère A, 1 à 99 % en poids de monomère B et 0 à 25 % en poids de monomère C.

5. Composition anti-salissure selon la revendication 1, dans laquelle le polysiloxane réticulé ou durci est un diorganosiloxane de la formule générale (IV) : 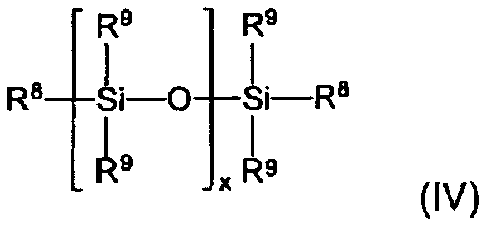 dans laquelle
R⁸ est un hydroxyle ou -O-Si(R¹⁰)_{y}(R₁₁)_{(3-y)},
R⁹ est indépendamment sélectionné à partir d'un alkyle, aryle et alkaryle en C₁-C₁₀,
R¹⁰ est un hydroxy ou un alcoxy en C₁-C₃,
R¹¹ est de l'hydrogène ou un alkyle en C₁-C₃,
y est un entier de 1 à 3.

6. Composition anti-salissure selon les revendications 1 à 5, dans laquelle le polysiloxane durci ou réticulé est un polydiméthylsiloxane réactif.

7. Composition anti-salissure selon les revendications 1 à 5, dans laquelle la quantité du polymère ou de l'oligomère fluoré est de 0,1 à 25 % en poids du polysiloxane cuit ou réticulé.

8. Utilisation d'une composition anti-salissure selon l'une quelconque des revendications 1 à 7, dans des revêtements anti-salissure pour des articles submergés dans de l'eau de mer.

9. Utilisation selon la revendication 8, dans laquelle les articles sont des structures maritimes comme des navires, des plates-formes pétrolières et des bouées.
